# EUROPEAN PATENT APPLICATION

(11) **EP 4 841 574 A1**
(43) Date of publication of application: **18.11.2026**
(21) Application number: 25305686.5
(22) Date of filing: 14.05.2025
(51) Int. Cl.: G06T 15/08

(54) **METHOD FOR GENERATING AN OUTPUT IMAGE WITH AN ENHANCED RENDERING**

(71) Applicant: Avatar Medical, 75015 Paris (FR)
(72) Inventor: EL BEHEIRY, Mohamed, 75015 Paris (FR); PETIT, Quentin, 75015 Paris (FR); GUÉRINOT, Corentin, 75015 Paris (FR); BRIENT-LITZLER, Elodie, 75015 Paris (FR)
(74) Representative: Icosa

(57) **Abstract**

The present invention relates to a computer-implemented method for generating an output image with an enhanced rendering of at least one structure of interest, said method comprising receiving a selection of a subset of voxels from the input image, determining a transfer function configured to associate to each voxel of the at least one input image at least one parameter of visualization by computing a center feature f_{c}, defining, for feature values inferior to the center value f<f_{c}, an increasing function T₁, defining, for feature values superior to the center value f>f_{c}, a decreasing function T₂ verifying, T₂(f)>T₁(2f_{c}-f), and updating the 3D representation of said at least one input image.

## Description

### FIELD OF INVENTION

The present invention relates to the fields of medical imaging and 3D visualization technology. In particular, the present invention relates to a computer-implemented method for generating an output image with an enhanced rendering of at least one structure of interest comprised in at least one input image.

### BACKGROUND OF INVENTION

Three-dimensional images of a patient's body, such as those from magnetic resonance imaging (MRI) or computed tomography (CT) scans, play a crucial role in medicine by allowing detailed and realistic visualization of human anatomy. They aid in diagnosis by providing doctors with a volume view of organs and internal structures, which is essential for planning surgical procedures, personalized treatments, and better understanding certain conditions.

However, visualizing organs from these images can present challenges, such as difficulty distinguishing similar density structures from one another or rendering small abnormalities. These issues can complicate the accurate interpretation of data and affect the precision of diagnoses or interventions.

Indeed, in the human body, many organs or tissues have similar densities or compositions, which makes them hard to differentiate in medical images. For example, muscles and fat may have similar densities for certain types of imaging, making it difficult to identify subtle differences between them. In a 3D image, especially when the resolution is not sufficiently high, this can lead to confusion or misinterpretation, as doctors may struggle to separate these structures clearly. Without adequate contrast between different tissues, it is challenging to identify pathologies that may be located in one structure but not the other.

Furthermore, 3D imaging techniques, such as CT or MRI, can sometimes have limitations due to their native resolution. Small abnormalities, such as minute tumors, cysts, or vascular abnormalities, may not be captured with the necessary detail if the imaging resolution is too low. These subtle anomalies can be hidden by the noise of the data, making them hard to identify, especially in complex or dense areas of the body such as the brain or the lungs. Additionally, small abnormalities may be obscured by the overlapping structures of adjacent organs, which may affect their detection and lead to delays in diagnosis or inappropriate treatment plans.

Volume rendering of 3D medical images is often used in several healthcare contexts, but the quality of the rendered image along with the contrast between anatomical structures of interest strongly depends on the type of transfer function (TF) that is applied to the image.

Ray-based volume rendering involves casting rays from a virtual viewpoint through each pixel of a 2D image plane into the 3D volume data. As each ray travels through the volume, it samples voxel values along its path. These samples are mapped to optical properties - such as color and opacity - using a transfer function. The final pixel value in the rendered image is computed by accumulating and blending these mapped values along the ray's path, using techniques such as compositing. This process simulates light absorption and emission within the volume to generate a 2D image that visually represents the internal structures in 3D for a given viewing perspective.

A transfer function (TF) applied to an image aims to modify the representation or rendering of said image, by modifying, for example, the colour and the transparency (also called opacity) of the pixels or voxels of said representation.

Conventional software allows users to apply pre-defined transfer functions that in turn attribute optical properties to the pixels or voxels. Such pre-defined transfer functions are not always adapted to corresponding analysis. They do not account for the variability that can exist in the acquisition, especially for MRI images, where the same organ can have high different pixel intensities in two images taken by different machines under different protocols. Also, in ambiguous images, where the demarcation of structures may be unclear to even trained experts, the pre-defined transfer functions need to be revised for effective separation.

Manual adjustments of some hyper-parameters of the transfer functions are sometimes allowed by the software. However, manual design of said transfer function can be a tedious and time-consuming task and does not necessarily lead to the best optimization of the transfer function for the concerned case.

Therefore, there is a need for improved methods and tools for the easy calculation of transfer functions in 3D image rendering, aimed at enhancing the efficiency, accuracy, and usability of medical imaging.

The present invention falls within this context.

### SUMMARY

This invention thus relates to a computer-implemented method for generating an output image with an enhanced rendering of at least one structure of interest comprised in at least one input image, said method comprising:
- obtaining said at least one input image, said at least one input image being a 3D image composed of an ensemble of voxels, wherein each voxel is associated to at least one feature value;
- obtaining a 3D representation of said at least one input image, said 3D representation being obtained via ray-based volume rendering;
- receiving a selection of a subset of voxels from said ensemble of voxels, wherein the selected subset of voxels contains a majority of voxels corresponding to the at least one structure of interest;
- determining a first transfer function P=T(f) configured to associate to each voxel of the at least one input image at least one parameter P of visualization, such as an opacity, by executing:
   o clustering the subset of voxels into at least two populations based on at least one feature value of the subset of voxels;
   o selecting, among said at least two populations, an interest population having highest probability to correspond to the at least one structure of interest;
   o defining the first transfer function by executing:
      ▪ computing a characteristic feature value for the interest population, referred to as center value fc, based on at least one feature value of the interest population,
      ▪ defining said first transfer function, for feature values inferior to the center value f<fc, as an increasing function T1,
      ▪ defining said first transfer function, for feature values superior to the center value f>fc, as a decreasing function T2 verifying, T2(f)>T1(2fc-1),
- updating said 3D representation, using said first transfer function on the at least one input image, so that the updated 3D representation provides an enhanced 3D representation of the at least one structure of interest,
- displaying said updated 3D representation with said enhanced rendering of the at least one structure of interest.

A sharp slope in the transfer function opacity allows to suppress the lower values of intensities and associated noise by assigning them a quasi-zero opacity leading the low intensity zones almost transparent in the updated 3D representation.

On the contrary, anatomical elements whose relative positions are important, such as the bones in a CT often have very elevated contrast in the image. Setting the opacity as slowly decreasing at these intensities will allow these important structures to appear moderately in the updated 3D representation by assigning them a non-zero value of opacity.

Also empirically, the inventors have surprisingly found that a smooth decreasing slope in the medium to high values ensures a smoother rendering than a quickly decreasing slope.

Finally, the computation of the transfer function as described above is advantageous. Indeed, the computation is simple and does not require any time consuming algorithm, machine learning or other. Therefore, it allows a real-time update of the 3D representation.

According to other advantageous aspects of the invention, the method further comprises displaying at least one cross-section of said at least one input image.

According to other advantageous aspects of the invention, displaying at least one cross-section of said at least one input image further comprises displaying the 3D representation, the at least one cross-section of said at least one input image and the 3D ∘representation being displayed on two different panels and displaying the updated 3D representation is performed on said second panel.

The present invention further relates to computer-implemented method for defining a first transfer function to apply to at least one input image in order to obtain an output image with an enhanced rendering of at least one structure of interest comprised in at least one input image, said at least one input image being a 3D image composed of an ensemble of voxels, said method comprising:
- receiving a selection of a subset of voxels from said ensemble of voxels, wherein the selected subset of voxels contains a majority of voxels corresponding to the at least one structure of interest;
- determining a first transfer function P=T(f) configured to associate to each voxel of the at least one input image at least one parameter P of visualization, such as an opacity, by executing:
   ∘ clustering the subset of voxels into at least two populations using a fitting algorithm applied to at least one feature value of the subset of voxels;
   ∘ selecting an interest population having highest probability to correspond to the at least one structure of interest;
   ∘ defining the first transfer function by executing:
      ▪ computing a characteristic feature value of the interest population, referred to as center value f_{c}, based on at least one feature value of the interest population,
      ▪ defining the first transfer function, for feature values inferior to the center value f<f_{c}, as an increasing function T₁,
      ▪ defining the first transfer function, for feature values superior to the center value f>f_{c}, as a decreasing function T₂ verifying, ${T}_{2} \left(f\right) > {T}_{1} \left({2 f}_{c}-f\right) ,$
- providing as output said first transfer function.

According to other advantageous aspects of the invention, selecting the interest population comprises using a fitting algorithm a Gaussian mixture model comprising at least two Gaussian distributions and further comprises:
- fitting the Gaussian Mixture Model to said at least two populations through a fitting algorithm applied to the at least one feature values of the voxels of the at least two populations so as each one of said at least two populations is fitted to one Gaussian distribution,
- receiving a selection of at least one voxel of said at least one input image, said at least one voxel having a feature value referred to as interest feature value;
- selecting the interest population as the one corresponding to the Gaussian distribution among the at least two Gaussian distributions whose a mean value is the closest to said received interest feature value.

The present invention further relates to computer-implemented method for defining a second transfer function to apply to at least one input image in order to obtain generating an output image with an enhanced rendering of at least one structure of interest comprised in at least one input image, said at least one input image being a 3D image composed of an ensemble of voxels, said method comprising:
- receiving a selection of a subset of said ensemble of voxels, wherein the selected subset of voxels contains a majority of voxels corresponding to the at least one structure of interest;
- determining a second transfer function P=T(f) configured to associate to each voxel of the at least one input image at least one parameter P of visualization, such as an opacity, by executing:
   ∘ computing a characteristic feature value, said characteristic feature value being referred to as center value f_{c} based on at least one feature value of the selected subset of voxels;
   ∘ defining the second transfer function by executing:
      ▪ defining the second transfer function, for feature values inferior to the center value f<f_{c}, as an increasing function T₁,
      ▪ defining the second transfer function, for feature values superior to the center value f>f_{c}, as a decreasing function T₂ verifying, ${T}_{2} \left(f\right) > {T}_{1} \left({2 f}_{c}-f\right) ,$
- providing as output said second transfer function.

According to other advantageous aspects of the invention, defining said increasing function T₁ and said decreasing function T₂ is based on parameters of either said the at least one feature values of the voxels of the selected subset or said distribution curve.

According to other advantageous aspects of the invention, the at least one parameter P of visualization is an opacity value.

According to other advantageous aspects of the invention, the at least one feature value is an intensity value.

According to other advantageous aspects of the invention, computing a characteristic feature value of the interest population is performed by fitting a distribution curve to said selected subset through a fitting algorithm applied to the at least one feature values of the voxels of the selected subset, the fitting algorithm being based on a Lorentzian Mixture Model, a Gaussian Mixture Model or a Voigt Mixture Model.

The present invention further relates to computer-implemented method for generating an output image with an enhanced rendering of at least one structure of interest comprised in at least one input image, said method comprising:
- obtaining said at least one input image, said at least one input image being a 3D image composed of an ensemble of voxels, wherein each voxel is associated to at least one feature value;
- obtaining a 3D representation of said at least one input image, said 3D representation being obtained via ray-based volume rendering;
- receiving a selection of a subset of voxels from said an ensemble of voxels composing the input image or the 3D representation, wherein each voxel is associated to at least one feature value, wherein the selected subset of voxels contains a majority of voxels corresponding to the at least one structure of interest;
- applying at least one statistical test on the at least one feature values of said subset of voxels so as to determine a number of populations comprised in the subset of voxels;
- determining a transfer function by:
   ∘ if said number is equal to one, providing said selection of subset of voxels as input to the computer-implemented method for defining a second transfer function, and implementing said method to obtain a first transfer function as transfer function; else
   ∘providing said subset of voxels as input to computer-implemented method for defining a first transfer function, implementing said method to obtain a second transfer function as transfer function;
- updating said 3D representation, using said transfer function on the at least one input image, so that the updated 3D representation provides an enhanced 3D representation of the at least one structure of interest,
- displaying said updated 3D representation with said enhanced rendering of the at least one structure of interest.

According to other advantageous aspects of the invention, displaying the updated 3D representation with said enhanced rendering of the at least one structure of interest is performed using a stereoscopic display such as a VR headset or an autostereoscopic screen.

According to other advantageous aspects of the invention, the method for generating an output image with an enhanced rendering of at least one structure of interest or the method for defining a first or a second transfer function further comprises displaying at least one cross-section of said at least one input image in a displaying panel and wherein receiving a selection of a subset of voxels is performed by positioning a cursor in said displaying panel, the subset of voxels being selected inside a predetermined 3D geometrical shape centered on or in vicinity of a position of the cursor in said displaying panel.

According to other advantageous aspects of the invention, the method for generating an output image with an enhanced rendering of at least one structure of interest or the method for defining a first or a second transfer function further comprises, before receiving a selection of a subset of voxels, labelling each voxel with at least one label value, displaying at least one cross-section of said at least one input image in a displaying panel and wherein receiving a selection of a subset of voxels is performed by positioning a cursor in said displaying panel and selecting the voxels labelled with the label value equal to the label value of the voxel the closest to a position of the cursor in said displaying panel.

The present invention further pertains to a computer program product comprising instructions which, when the program is executed by a computer, cause the computer to carry out the method for generating an output image with an enhanced rendering of at least one structure of interest or a method for defining a first or a second transfer function compliant with any of the above execution modes.

In addition, the invention relates to a computer program comprising software code adapted to perform a method for generating an output image with an enhanced rendering of at least one structure of interest or a method for defining a first or a second transfer function compliant with any of the above execution modes when the program is executed by a processor.

The present invention further pertains to a non-transitory program storage device, readable by a computer, tangibly embodying a program of instructions executable by the computer to perform a method for generating an output image with an enhanced rendering of at least one structure of interest of a method for defining a first or a second transfer function, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

### DEFINITIONS

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, *e.g.,* an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

A **"transfer function"** designates a function that when applied to an image aims to modify the representation or rendering of said image. Ray-based volume rendering involves casting rays from a virtual viewpoint through each pixel of a 2D image plane into the 3D volume data. As each ray travels through the volume, it samples voxel values along its path. These samples are mapped to optical properties - such as color and opacity - using a transfer function.

### BRIEF DESCRIPTION OF THE DRAWINGS

The present disclosure will be better understood, and other specific features and advantages will emerge upon reading the following description of particular and non-restrictive illustrative embodiments, the description making reference to the annexed drawings wherein:
**Figure 1** is a block diagram representing schematically a particular mode of a system for generating an output image with an enhanced rendering of at least one structure of interest defined from at least two populations of voxels, compliant with a first embodiment of the present disclosure;
**Figure 2** is a flow chart showing successive steps executed with the device for generating an output image with an enhanced rendering of at least one structure of interest of Figure 1;

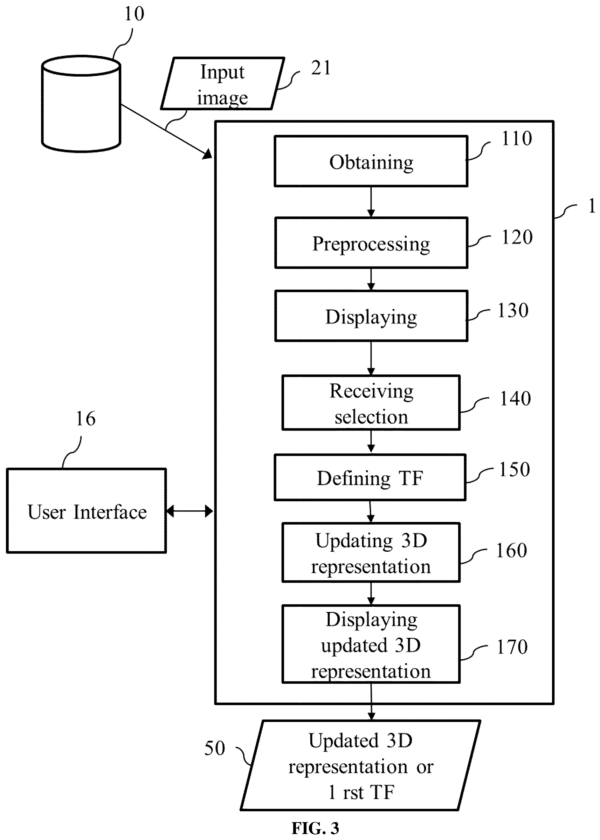

**Figure 3** is a block diagram representing schematically a particular mode of a system for generating an output image with an enhanced rendering of at least one structure of interest defined from one population of voxels, compliant with a first embodiment of the present disclosure;
**Figure 4** is a flow chart showing successive steps executed with the device for generating an output image with an enhanced rendering of at least one structure of interest of Figure 3;
**Figure 5** is a block diagram representing schematically a particular mode of a system for generating an output image with an enhanced rendering of at least one structure of interest, compliant with a second embodiment of the present disclosure;
**Figure 6** is a flow chart showing successive steps executed with the device for generating an output image with an enhanced rendering of at least one structure of interest of Figure 5;

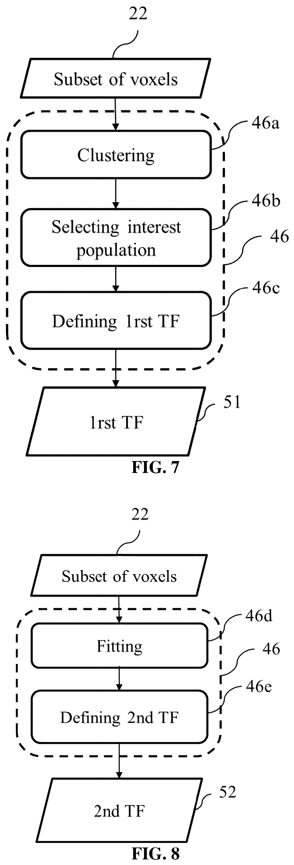

**Figure 7** is a flow chart showing successive steps for determining a transfer function according to one embodiment of the present disclosure executed with the device for generating an output image with an enhanced rendering of at least one structure of interest of Figure 5;
**Figure 8** is a flow chart showing successive steps for determining a transfer function according to another embodiment of the present disclosure executed with the device for generating an output image with an enhanced rendering of at least one structure of interest of Figure 5;
**Figure 9** diagrammatically shows an apparatus integrating the functions of the device for generating an output image with an enhanced rendering of at least one structure of interest of Figure 1, Figure 3 and Figure 5;
**Figure 10** shows a cross-section of a 3D image for selecting the interest population;
**Figure 11** shows a Double-Gaussian distribution for separating two populations of voxels with a zoom-in of Figure 10;
**Figure 12** shows the transfer function determined for the interest population of Figure 10;
**Figure 13** shown in the left-hand side is a 3D image acquired by CT and, in the right hand-side, an enhanced 3D representation resulting from using the system of Figure 1.

On the figures, the drawings are not to scale, and identical or similar elements are designated by the same references.

### ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, *i.e.,* any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present disclosure will be described in reference to a particular functional embodiment of a device 1 and a device 2 for generating an output image with an enhanced rendering of at least one structure of interest 630 comprised in at least one input image 21.

Though the presently described devices 1 and 2 are versatile and provided with several functions that can be carried out alternatively or in any cumulative way, other implementations within the scope of the present disclosure include devices having only parts of the present functionalities.

Each of the devices 1 and 2 is advantageously an apparatus, or a physical part of an apparatus, designed, configured and/or adapted for performing the mentioned functions and produce the mentioned effects or results. In alternative implementations, any of the device 1 and the device 2 is embodied as a set of apparatus or physical parts of apparatus, whether grouped in a same machine or in different, possibly remote, machines. The device 1 and/or the device 2 may e.g. have functions distributed over a cloud infrastructure and be available to users as a cloud-based service, or have remote functions accessible through an API.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1 or of the device 2.

The device 1 and the device 2 are interacting with a user interface 16, via which information can be entered and retrieved by a user. The user interface 16 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

### Device 1

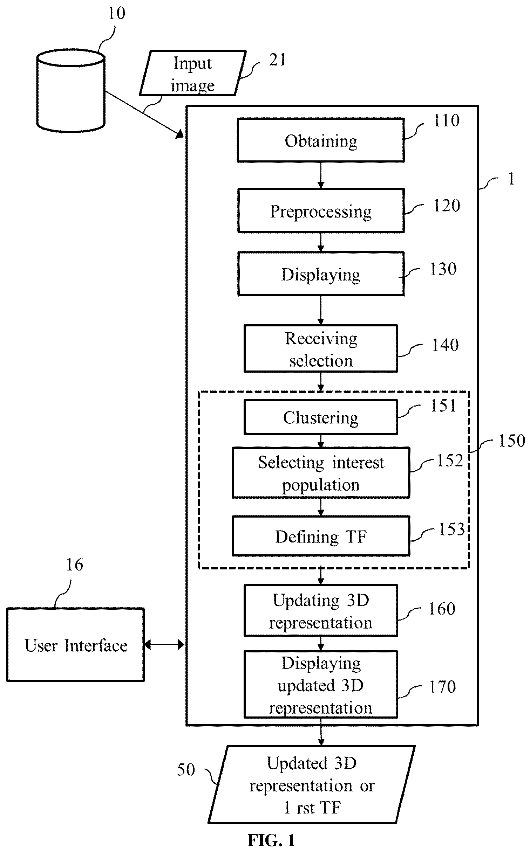

The device 1, as illustrated in Figure 1, is adapted to produce an updated three-dimensional (3D) representation so that this update provides said enhanced rendering of the at least one structure of interest 630.

The at least one structure of interest may be one of: a specific bone or an assembly of bones forming a particular structure (such as, for example: a shoulder, a knee, a hip, an elbow, or wrist joints), soft tissues (such as, for example: muscles, tendons, ligaments, cartilage), organs or small abnormalities, depending on what a user wants to visualize in the rendering image obtained with the present invention.

Advantageously, the structure of interest 630 in the update 3D representation is represented with high contrast with the surrounding tissue. This allows to separate the different structures clearly and to enhance the representation of small abnormalities.

The input data may be derived from at least one input image 21. The input image 21 is a 3D image. The input image 21 may have been previously obtained with a magnetic resonance imaging (MRI) or a computed tomography (CT) scan. The input image 21 may also have been previously obtained with a positron emission tomography (PET) or a SPECT.

The device 1 comprises a module 110 for obtaining the input image 21, previously acquired, stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

To acquire the input image, the MRI machine, PET machine or CT scan collects a series of 2D cross-sectional images (slices) of the body representing thin cross-sections of the body. These slices are usually stacked together and are captured consecutively at different locations and orientations (like sagittal, coronal, or axial views). The slices are then stacked together to form the 3D image. Each slice becomes a layer in the volume and the pixels become voxels.

The device 1 further comprises optionally a module 120 for preprocessing the received input image 21. The module 120 may notably be adapted to standardize the received image data 21 for sake of efficient and reliable processing. This may enhance the efficiency of the downstream processing by the device 1. Such a standardization may be particularly useful when exploited images originate from different sources, including possibly different imaging systems. The module 120 may transform the image data 21, *e.g.* by image decompression. The module 120 may extract attribute from the image data 21. It may align these slices accurately before reconstruction of the 3D image. It may comprise filtering such as Gaussian filtering or denoising the slices to improve image quality. According to various configurations, the module 120 is adapted to execute only part or all of the above functions, in any possible combination, in any manner suited to the following processing stage.

The input image 21 is composed of an ensemble of voxels. Each voxel represents a value on a regular grid in a three-dimensional space. Each voxel is associated to at least one feature value. When the voxel is associated to a plurality of feature values, the feature values may be arranged in a vector comprising the feature values. For example, the feature value is the original grey-scale intensity at the position of said voxel. In another example, the feature value is computed using intensity collected at the position of said voxel as well as intensity collected by neighboring voxels. This allows a suppression of noise that may be present in data of a single channel. For example, the neighboring voxels involved in the computation of the feature value are determined by triangulation. For example, the neighboring voxels are the first direct neighbors of said voxel, or first and second direct neighbors of said voxel. The feature value may be computed by using the mean or the median of intensities collected by said voxel and by the neighboring voxels. Using neighboring voxels is advantageous when the signal-to-noise ratio of the intensity is low. Indeed, taking voxels' neighborhood into account allows to reduce the noise, prior to starting the calculation.

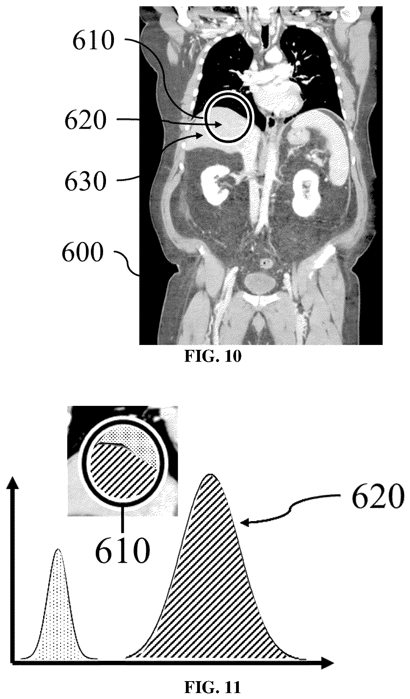

The device 1 further comprises a module 130 which is configured for displaying at least one cross-section of said at least one input image 21, for example in a first panel. The cross-section may correspond to one of the slices of the input image 21. An example of cross-section 600 of the input image 21 is shown in Figure 10. In some embodiments, the first panel may be displayed as part of virtual scene and can be displayed on a 3D display device such as, for example: a stereoscopic 3D monitor, an autostereoscopic 3D display, a virtual reality - VR - headset, an augmented reality - AR - device, or a 3D holographic display. The module 130 may be also configured to display the first panel in an auto stereoscopic screen.

The module 110 may also obtain a 3D representation 700 of said at least one input image 21. The 3D representation 700 may be stored in one or more local or remote database(s). The at least one input image 21 and the 3D representation 700 may be stored in the same database(s) 10. Alternatively, the 3D representation 700 is obtained using the module 120 for preprocessing.

The 3D representation 700 may be obtained using a ray-based volume rendering technique applied to the input image 21. Ray-based volume rendering is a powerful method particularly useful for visualizing anatomical structures in 3D medical data, such as organs, tissues, and other internal parts. The technique involves casting rays from a virtual viewpoint through each pixel of a 2D image plane into the 3D volume data. As each ray travels through the volume (represented by the input image 21), it samples voxel values along its path. These samples are mapped to optical properties-such as color and opacity-using a transfer function. The final pixel value in the rendered image is computed by accumulating these mapped values along the ray's path, using techniques such as compositing. This process simulates light absorption and emission within the volume to generate a 2D image that visually represents the internal structures in 3D. The 3D representation 700 may be obtained using ray-based rendering algorithms, such as ray casting or ray tracing.

In the 3D representation 700, each pixel in the final rendered image corresponds to the accumulated result of sampling and compositing the voxel values along a ray path. The voxel values from the input image 21 are transformed through a transfer function that assigns specific colors and opacities based on their intensity. Typically, higher opacity values result in more prominent (brighter or more visible) structures in the final rendering. This mapping allows selective emphasis of particular anatomical features. The volume rendering process may be performed by module 120.

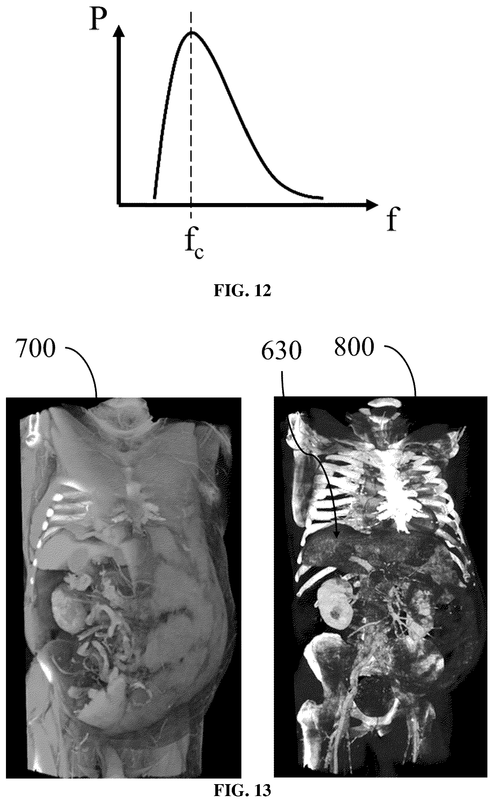

The 3D representation 700, comprising the color and opacity obtained for example using a predefined transfer function, may be displayed as represented in left hand-side of Figure 13. To do so, the module 130 may be further configured for displaying the 3D representation 700 in a second panel. The first panel for displaying the 3D image may be different from the second panel. The first panel and the second panel may be part of the same auto stereoscopic display.

The device 1 further comprises a module 140 for receiving a selection of a subset 610 of voxels from said ensemble of voxels. The subset of voxels 610 may be selected from the input image 21. Notably, the subset 610 of voxels may be selected from the cross-section 600 of the input image 21 displayed on the first panel, as represented in Figure 10. As previously disclosed, the device 1 is configured to interacting with the user interface 16, which in this case may be used by the user to select the subset of voxels 610. In one example, the user may position a graphical pointer (e.g., mouse cursor) on the cross-section 600 of the input image 21 or on the 3D representation 700 and just click or point during a predetermined duration to select one or more voxels. In one example, one click or one pointing (*i.e.,* one voxel selection) is sufficient as the module 140 may be configured to define the selected subset of voxels 610 as the one user selected voxel and a predefined number of neighboring voxels. The neighboring voxels may be defined as the voxels located within a predefined distance from the one user selected voxel, not only in the displayed cross-section but in the ensemble of voxel of input image 21 (*e.g.,* a spherical region of voxels centered on the user selected voxel). In alternative examples, the position of the (mouse) cursor leads to the selection of voxels according to a predetermined 3D geometrical shape (a sphere, a cube...) centered on or in vicinity of the (mouse) cursor position. In one alternative example, the subset 610 of voxels may be selected from the 3D representation 700. In this example, one click or one pointing (*i.e.,* one voxel selection) in the 3D representation 700 is transposed to a corresponding voxel in the input image 21. The neighboring voxels are then selected, as in the previous example, on the input image 21 using said corresponding voxel as user selected voxel.

Alternatively, the subset of voxels 610 may be selected by selecting a pixel from the cross-section 600 of the input image 21 displayed on the first panel, or a voxel from the 3D representation 700, and initiating a tagging process from this selection. The tagging process can be based on algorithms leading to a probabilistic exploration of the region based on similarities with the selected pixel or voxel. Other algorithms include but are not limited to: flooding algorithms, watershed algorithms, pixel/voxel classification algorithms.

Alternatively, the subset of voxels 610 may be selected by an artificial intelligence trained to select a subset of voxels comprising an anatomical structure or to select a subset of voxels corresponding to a predetermined organ. In another example, each voxel of the input image 21 or the 3D representation 700 is labelled with at least one label value, the subset 610 of voxels being selected by the positioning of a cursor in the second panel and selecting the voxels labelled with the label value equal to the label value of the voxel the closest to a position of the cursor. For example, the module 120 for preprocessing may be further configured to associate at least one label value to each voxel. For example, the label value is a value representative of an ontology. For example, the labelling of the voxels may be performed using a machine learning foundational model allowing to perform segmentation of the anatomical structures in the input image 21 or the 3D representation 700.

According to one embodiment, the selected subset 610 of voxels comprises a majority of voxels corresponding to the at least one structure of interest 630. In other words, the user is instructed and able to select a subset wherein the majority of voxels corresponding to the at least one structure of interest 630, or the module 140 uses an automated algorithm that returns a selected subset 610 of voxels wherein the majority of voxels corresponding to the structure of interest(s) 630 selected by the user (*i.e.,* the user may provide as input that the structure of interest is the liver). Figure 10 illustrates an example wherein the structure of interest 630 is the liver appearing in light grey in the cross-section 600 of the input image because of the high opacity. This example subset of voxels thus comprises most voxels of high intensity values compared to voxels of low intensity values corresponding to the lung. The selected subset 610 of voxels may comprise more than 90%, preferably more than 95%, even more preferably more than 99% of voxels corresponding to the at least one structure of interest 630.

The device 1 further comprises a module 150 for determining a transfer function configured to associate to each voxel of the at least one input image 21 at least one parameter P of visualization. For example, the visualization parameter P may be associated with a value of opacity (*e*.*g*., how transparent or opaque a voxel is) or a color (*e.g*., how the voxel is colored in the final rendering). For example, the parameter P is a value of color for further visualization.

In the present disclosure, the transfer function may be expressed as *P=T*(*f*) with *T* the transfer function and *f* one of the feature values associated with a given voxel.

For example, *f* may represent the intensity value at the voxel's position in the input image 21. In another case, *f* may represent a preprocessed intensity value, obtained after applying filtering (for example convolution filtering) or normalization on the input image 21. In another example, *f* may also be defined as a composite intensity, computed from the voxel and its neighboring voxels (*e.g*., via local averaging or gradient-based measures). Alternatively, *f* may represent the accumulated light intensity (*e.g.,* radiance) at the voxel's position as computed during the rendering process in the 3D representation.

In some embodiments, the computation of the transfer function may depend on a feature value of the voxels which is not directly related to the intensity of the voxels. In this embodiment, for each of said feature value, a transfer function having as parameter*f* the intensity values of the voxels characterized by said feature value is computed. Therefore, the transfer function may be different for different feature values.

In some implementations, *P* may be related to the opacity value assigned to the voxel as a result of applying an initial or previous transfer function.

In a first configuration of the device 1, the module 150 may comprise a module 151 for clustering the subset 610 of voxels into at least two populations based on at least one feature value, such as intensity, of the selected voxels. In other words, the module 151 is configured to separate the subset 610 of voxels into at least two populations based on at least one feature value. The device 1 may be thus configured to determine a transfer function assuming that at least two populations of voxels are included in the subset 610 of voxels.

For example, clustering is performed by selecting a characteristic value among the resulting feature values. The selection of the characteristic value may be performed using a statistical analysis of the selected voxels.

In another example, clustering is performed using a fitting algorithm applied to the at least one feature value of the selected voxels. The fitting may be performed by fitting a sum of Gaussians, as the assumption is made that the intensity values are obtained from a combination (mixture) of multiple Gaussian distributions. Indeed, as represented in Figure 10, the subset 610 of voxels has two distributions of intensity value: the low intensity value in the lung and the high intensity value in the liver. Therefore, fitting the intensities of the selected voxels with a double-Gaussian fitting allows to separate (*i.e.,* cluster) the subset 610 of voxels into a group of voxels associated to the liver and a group of voxels associated to the lung. The resulting double-Gaussian distribution is shown in Figure 11 showing the intensity value on the x-axis and the number of voxels with the corresponding intensity value on the y-axis. A zoom-in of Figure 10 is also shown on Figure 11 to associate the populations of voxels in the shaded area 620 and the dotted area to the double-Gaussian.

In another example, clustering is performed by unsupervised machine learning technique by finding patterns or structures in features of the subset 610 of voxels without prior labels. The unsupervised machine learning technique may be one of: K-Means Clustering, Hierarchical Clustering, Density-Based Spatial Clustering of Applications with Noise (DBSCAN), Gaussian Mixture Model or Mean Shift Clustering.

In the first configuration of the device 1, the module 150 further comprises a module 152 for selecting, among the at least two populations obtained from module 151, the interest population 620, being the one having highest probability to correspond to the at least one structure of interest 630. For example, in figure 10, the population having the highest probability to correspond to the structure of interest 630 (the liver) is the population with the highest intensity value. In Figure 11, the Gaussian distribution corresponding to the structure of interest 630 is thus the right-hand side distribution with the higher intensity values.

According to one embodiment, the module 152 is further configured to receive a selection of at least one (reference) voxel of said at least one input image 21, said at least one (reference) voxel having a feature value referred to as interest feature value. In one example, the user may select this reference voxel from the cross-section represented in the first panel. This selection of the reference voxel may be performed after the selection of the subset of voxels 610. Module 152 may be then configured to select the interest population 620 as the one corresponding to the Gaussian distribution among the at least two Gaussian distributions whose mean value is the closest to said received interest feature value. In the case of Figure 10, the user would have selected as reference voxel, to obtain the interest feature value, one of the voxels comprised in the liver region.

The reference voxel may be selected by the user for example through the user interface 16. In one example, module 152 may be configured to, via the user interface 16, present the results of the clustering to the user and invite him/her to select at least one structure of interest among the structures obtained from said clustering. For example, a list of the clustered structures may be displayed on a display device and the user can select one or more with a controller. For example, to select one interest population, the user may select (*i.e.* manually tag) with the controller at least one voxel associated to the at least one selected structure of interest, and the module 152 is configured to extend/propagate the selection to voxels, having similar characteristics (*e*.*g*., in the same cluster) to form the interest population. This step may be repeated for each structure of interest. This allows the user to select the one or more structures of interest they wish to view enhanced on the rendering image obtained as output of the method.

The module 152 may comprise an artificial intelligence trained to select a population corresponding to an input structure of interest based on clustered populations of voxels. The interest population 620 is therefore selected by said artificial intelligence by inputting the structure of interest 630.

In another example, the module 152 is configured to use clinical information of the patient to extract the one or more structures of interest to be enhanced on the enhanced 3D representation.

In a second configuration, the device 1 is configured to determine a transfer function assuming that a single population of voxels is included in the subset 610 of voxels. This is the case for example if the user selects a subject of voxels having a homogeneous intensity or color in the cross-section 600 of the input image 21 or if the voxels are labelled and the subset 610 of voxels is filtered on a selected label. Therefore, in this second configuration, the selected subset 610 of voxels preferably comprises more than 90%, preferably more than 95%, even more preferably more than 99% of voxels corresponding to the at least one structure of interest 630. In this second configuration, no clustering is needed. Indeed, the whole selected subset 610 is considered as the interest population 620. In this second configuration, a fitting algorithm may be applied to the at least one feature value of the selected voxels. The fitting may be performed by fitting a single Gaussian.

In the first or the second configuration, the module 150 is configured for defining the transfer function *T(f)* (herein called "first transfer function" in relation to device 1 which is configured to work on the assumption that the subset of voxels 610 comprises either one or at least two populations of intensity values). In the first configuration of the device 1, this determination of the transfer function *T(f)* may be performed by a module 153 comprised in the module 150. For example, the module 150, and more precisely the module 153 in the first configuration of the device 1, is configured to define the first transfer function by computing a characteristic feature value of the interest population 620, referred to as center value f_{c}, based on at least one feature value of the interest population 620. For example, the center value f_{c} is the mean of intensity values of the interest population 620. In another example, when clustering by fitting the intensity with one or two Gaussian functions, the center value f_{c} is the mean of the Gaussian distribution fitting the interest population 620.

Then, the module 150, and more precisely the module 153 in the first configuration of the device 1, is configured to define the (first) transfer function for feature values *f* inferior to the center value (*f*<*f_{c}*) as an increasing function *T₁*(*f*<*f_{c}*). In other words, the (first) transfer function defined for feature values inferior to the center value has a positive derivative function.

The transfer function defined for feature values *f* superior to the center value (*f*>*f_{c}*) as a decreasing function *T₂*(f>f_{c}). In other words, the transfer function defined for feature values superior to the center value has a negative derivative function . Moreover, the decreasing function *T₂* verifies *T₂*(*f*)>T₁(2*f_{c}-f*).

According to one example, *T₁* and *T₂* may form an asymmetric gaussian function. The half width at half maximum (σ1) of the function *T₁* may be defined as a fraction of *f_{c}* such as *f_{c}*/2 (half of *f_{c}*), *f_{c}*/3 (third of *f_{c}*), or *f_{c}*/5 (a fifth of *f_{c}*). The half width at half maximum (σ2) of the function *T₂* may be defined as a multiple of *f_{c}* such as 2·σ1 (twice σ1), 3·σ1 (three times σ1), or 5·σ1 (five times σ1).

In other words, at equal distances from the center value *f_{c},* the at least one parameter P is always lower at low feature values than at high feature values. For example, considering P as an opacity value and the feature value as the intensity at each voxel of the subset of voxels, at equal distances from the mean intensity of the subset of voxels, the opacity is always lower at low intensities than at high intensities values. An example of transfer function determined for the subset 610 of voxels selected in Figure 10 is represented in Figure 12.

This advantageously allows to define:
- a sharp slope in the transfer function at low intensities allowing to suppress the lower values of intensities by assigning them a quasi-zero opacity or the darkest color leading the low intensity zones almost transparent in the updated 3D representation; and
- a soft slope in the transfer function at high intensities allowing important structures such as bones to appear subtly in the updated 3D representation by not assigning them a value of opacity equal to zero or the darkest color.

At the feature value equal to the center value *f_{c},* the transfer function may be defined so that the opacity associated to T(*f_{c}*) is close to 1 (0% transparency).

It may be observed that the operation of obtain a 3D representation 700 of said at least one input image 21 by the module 110, displaying at least one cross-section of said at least one input image 21 by the module 130, receiving a selection of a subset 610 of voxels from the cross-section 600 of the input image 21 by the module 140 and determining a transfer function are not necessarily successive in time, and may overlap, proceed in parallel or alternate, in any appropriate manner. For example, the cross-section of said at least one input image 21 may be displayed and the subset 610 of voxels selected before obtaining the 3D representation 700.

The device 1 further comprises a module 160 for updating the 3D representation 700 using the computed (first) transfer function on the at least one input image 21. This allows to associate a value of the parameter P to each voxel of the input image 21 according to the feature value associated to said voxel obtaining the updated 3D representation 800. In the embodiment wherein the feature value is the intensity or is directly derived from the intensity, updating the 3D representation is performed by directly applying the transfer function. In the embodiment wherein the feature value is not directly derived from the intensity, updating the 3D representation may comprise defining a maximum for the considered feature values and computing an adapted transfer function which has the same shape as the transfer function and a maximum corresponding to the maximum of the considered feature values.

Consequently, the updated 3D representation 800 provides an enhanced 3D representation of the at least one structure of interest 630 as represented for example in the right hand-side of Figure 13 representing the opacity at each voxel, the higher the opacity, the whiter is the representation of the voxel. In this example, compared to the 3D representation 700 in left hand-side of Figure 13, in the updated 3D representation, the skin almost disappears from the rendering (low opacity), the bones have high opacity and noise have zero opacity leading to a high contrast 3D representation wherein the liver is easily identifiable.

The computation of the transfer function as described above is advantageous. Indeed, the computation is simple and does not require any machine learning algorithm or any additional volume rendering. Therefore, it provides a real-time update of the 3D representation. For example, in the embodiment wherein the subset of voxels 610 is selected by a user by clicking or pointing to select one or more voxels and automatically selecting the neighboring voxels located within a predefined distance from the one user selected voxel, the user may hover over the region of interest by successively clicking or pointing several voxels and the device 1 may be configured to compute the transfer function and update the 3D representation 800 at each user selected voxel in real time so that the user may subsequently choose the best user selected voxel.

The device 1 may further comprise a module 170 for displaying said updated 3D representation with said enhanced rendering of the at least one structure of interest 630. The display may be performed on the second panel (i.e., replacing the initial/previously displayed 3D representation). Alternatively, a third panel may be displayed, different from the first panel and/or the second panel. The third panel may be part of the stereoscopic display as the first panel and/or the second panel.

The device 1 may provide as an output 50 the updated 3D representation and/or the computed transfer function.

In one embodiment, a color profile may be defined according to the computed transfer function. For example, the color profile may be a color blend from a primary color to a secondary color. For example, the primary color is red, blue, yellow or a combination thereof. For example, the secondary color is white. The color blend may be sharp for feature values *f* inferior to the center value (*f*<*f_{c}*) so that at the smallest value of *f*, the color is the primary color and at feature values superior or equal to the center value *f_{c}*, the color is the secondary color.

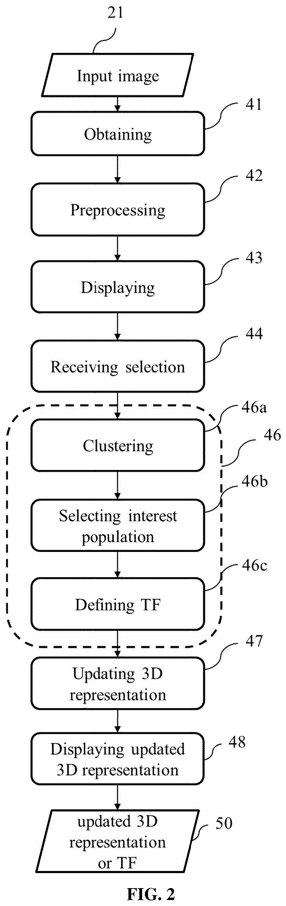

In its automatic actions, the device 1 may for example execute the following process (Figure 2):
- obtaining the input image 21 and optionally the 3D representation 700 of said at least one input image 21 (step 41),
- preprocessing the image data 21 and optionally obtaining the 3D representation 700 of said at least one input image (step 42),
- optionally, displaying at least one cross-section 600 of said at least one input image (step 43),
- receiving a selection of a subset 610 of voxels from said ensemble of voxels, wherein the selected subset 610 of voxels contains a majority of voxels corresponding to the at least one structure of interest 630 (step 44),
- determining (step 46) the transfer function P=T(f) configured to associate to each voxel of the at least one input image 21 at least one parameter P of visualization, such as an opacity or a color, by executing:
   ∘ optionally clustering (separating) the subset 610 of voxels into at least two populations based on at least one feature value of the subset 610 of voxels (step 46a),
   ∘ selecting an interest population 620 having highest probability to correspond to the at least one structure of interest 630 (step 46b),
   ∘ defining the transfer function (step 46c, 46f), by executing:
      ▪ computing a characteristic feature value for the interest population 620, referred to as center value *f*_{*c*,}
      ▪ defining said transfer function, for feature values inferior to the center value f<f_{c}, as an increasing function *T_{1,}*
      ▪ defining said transfer function, for feature values superior to the center value f>f_{c}, as a decreasing function *T₂* verifying, *T₂*(*f*)>*T₁*(2*f_{c}*-*f*),
- updating said 3D representation, using said transfer function on the at least one input image 21, so that the updated 3D representation provides an enhanced 3D representation of the at least one structure of interest 630 (step 47),
- displaying said updated 3D representation with said enhanced rendering of the at least one structure of interest 630 (step 48).

The device 1 may further execute extracting and providing as an output 50 the updated 3D representation and/or the transfer function.

### Device 2

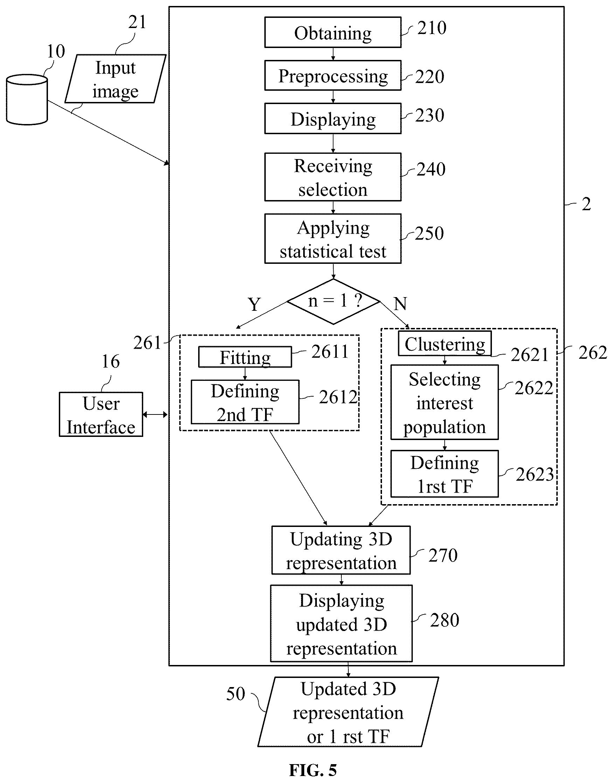

The present disclosure further relates to the device 2, as illustrated on Figure 5. The device 2 is adapted to produce an updated 3D representation with said enhanced rendering of the at least one structure of interest 630. Advantageously, the structure of interest 630 in the update 3D representation is represented with high contrast with the surrounding tissue. This allows to separate the different structures clearly and to enhance the representation of small abnormalities. The device 2 is not based on the assumption that the selection of a subset of voxels 610 will comprise at least two populations of intensity values (*e.g*., at least two anatomical structures of substantially different density, translating into substantially different intensity values in the input image 21).

As for device 1, the input data may be derived from at least one input image 21. The input image 21 is a 3D image. The input image 21 may be received from a magnetic resonance imaging (MRI). The input image 21 may be received from positron emission tomography (PET). The input image 21 may be received from a computed tomography (CT) scan, such as cone beam CT images.

The device 2 comprises a module 210 for obtaining the input image 21 stored in one or more local or remote database(s) 10. The module 210 of device 2 corresponds to the module 110 of device 1. In other words, the module 210 of device 2 has the same architecture and the same functionalities as module 110 of device 1.

The device 2 further comprises optionally a module 220 for preprocessing the received input image 21. The module 220 of device 2 corresponds to the module 120 of device 1. In other words, the module 220 of device 2 has the same architecture and the same functionalities as module 120 of device 1.

The 3D representation 700 of said at least one input image 21 may be obtained by the module 210 or the module 220.

The device 2 further comprises a module 230 which is configured for displaying at least one cross-section of said at least one input image 21. The module 230 of device 2 corresponds to the module 130 of device 1. In other words, the module 230 of device 2 has the same architecture and the same functionalities as module 130 of device 1. The module 230 may be configured to display the cross-sectional image or the 3D representation in a stereoscopic display such as a VR headset or an autostereoscopic screen. The module 230 may be further configured for displaying the 3D representation 700 in a second panel. The first panel for displaying the 3D image may be different from the second panel. The first panel and the second panel may be part of the same stereoscopic display.

The device 2 further comprises a module 240 for receiving a selection of a subset 610 of voxels from said ensemble of voxels. In one example, the selected subset 610 contains a majority of voxels corresponding to the at least one structure of interest 630. The module 240 of device 2 corresponds to the module 140 of device 1. In other words, the module 240 of device 2 has the same architecture and the same functionalities as module 140 of device 1.

It may be observed that the operation of obtain a 3D representation 700 of said at least one input image 21 by the module 210, displaying at least one cross-section of said at least one input image 21 by the module 230, receiving a selection of a subset 610 of voxels from the cross-section 600 of the input image 21 by the module 240 and determining a transfer function are not necessarily successive in time, and may overlap, proceed in parallel or alternate, in any appropriate manner. For example, the cross-section of said at least one input image 21 may be displayed and the subset 610 of voxels selected before obtaining the 3D representation 700.

The device 2 further comprises a module 250 for applying at least one statistical test on the at least one feature values of said subset of voxels so as to determine the number of populations comprised in the subset of voxels. For example, the statistical test comprises a gap statistic comparing the dispersion within the subset of voxels to that of a reference distribution or comprises fitting a Gaussian Mixture Model with different numbers of gaussians and using a predefined criterion such as the Akaike Information Criterion or the Bayesian Information Criterion to choose the best number of populations or comprises a Hopkins statistical testing whether the subset of voxels is significantly more clustered than uniformly random data.

As illustrated in Figure 5, the device 2 may further comprises a module 261 and a module 262, the two modules being configured to determine a transfer function.

If said number of populations is equal to one, the device 2 provides the subset 610 of voxels as input 22 to the module 261. The module 261 receives said subset 610 of voxels. The module 261 then determines the transfer function *T(f)* 51 configured to associate to each voxel of the at least one input image 21 at least one parameter P of visualization as explained above. To do so, a characteristic feature value, referred to as center value *f_{c}* is computed.

In the example illustrated in Figure 5, the module 261 comprises a sub-module 2611 for fitting a distribution curve to said selected subset 610 through a fitting algorithm applied to the at least one feature values of the voxels of the selected subset 610 and obtaining the characteristic feature value. For example, the distribution curve is a Gaussian distribution and the center value f_{c} is the mean of the fitted Gaussian distribution.

The module 261 may further comprises a sub-module 2612 for defining the transfer function by:
- defining the (second) transfer function 52, for feature values inferior to the center value *f*<*f_{c}*, as an increasing function *T₁.* In other words, the transfer function defined for feature values inferior to the center value has a derivative function positive.
- defining the transfer function 52, for feature values superior to the center value *f*>*f_{c}*, as a decreasing function *T₂.* In other words, the transfer function defined for feature values superior to the center value has a negative derivative function . Moreover, the decreasing function *T₂* verifies *T₂(f)>T₁(2f_{c}-f).* In other words, at equal distances from the center value *f_{c}*, the parameter P is always lower at low feature values than at high feature values.

Defining said increasing function *T₁* and said decreasing function *T₂* may be based on parameters of either said the at least one feature values of the voxels of the selected subset 610 or said distribution curve.

At the feature value equal to the center value f_{c}, the transfer function 52 is defined so that the opacity associated to T(*f_{c}*) is close to 1 (0% transparency).

The module 261 finally provides as output said transfer function 52.

If said number of populations is not equal to one (*i.e.,* is strictly superior to one), the device 2 provides the subset 610 of voxels as input 22 to the module 262. The module 262 receives said subset 610 of voxels. The module 262 then determines the transfer function. To do so, the module 262 comprises a sub-module 2621 for clustering the subset of voxels into at least two populations based on at least one feature value of the subset of voxels for example using a fitting algorithm applied to said at least one feature value. The clustering may be performed as using the module 151 of device 1. The module 262 may further comprise a sub-module 2622 for selecting an interest population 620 having highest probability to correspond to the at least one structure of interest 630. The selection of the interest population 620 may be performed as using the module 152 of device 1.

The module 262 may further comprise a sub-module 2623 for defining the transfer function *T(f)* 51 configured to associate to each voxel of the at least one input image at least one parameter P of visualization as explained above by:
- computing a characteristic feature value of the interest population, referred to as center value f_{c}. For example, the center value f_{c} is the mean of intensity of the interest population 620. In another example, when clustering by fitting the intensity with two Gaussian functions, the center value f_{c} is the mean of the Gaussian distribution fitting the interest population 620.
- defining the (first) transfer function 51, for feature values inferior to the center value *f*<*f_{c},* as a increasing function *T₁.* In other words, the transfer function defined for feature values inferior to the center value has a positive derivative function .
- defining the transfer function 51, for feature values superior to the center value *f*>*f_{c}*, as a decreasing function *T₂.* In other words, the transfer function defined for feature values superior to the center value has a negative derivative function . Moreover, the decreasing function *T₂* verifies *T₂(f)*>*T₁(2f_{c}-f).* In other words, at equal distances from the center value *f_{c}*, the parameter P is always lower at low feature values than at high feature values.

At the feature value equal to the center value *f_{c},* the transfer function is defined so that the opacity associated to T(*f_{c}*) is close to 1 (0% transparency).

The advantageous effects provided by the device 1 are also provided by the device 2.

The module 262 finally provides as output said transfer function 51.

The device 2 may further comprise a module 270, that upon receiving the determined transfer function from either the module 261 or the module 262, is configured for updating the 3D representation 700 using the determined transfer function. This allows to associate a value of the parameter P to each voxel of the input image 21 according to the feature value associated to said voxel.

Consequently, the updated 3D representation 800 provides an enhanced 3D representation of the at least one structure of interest 630 which is best adapted to the number of populations present in the selected subset of voxels 610.

The device 2 may further comprise a module 280 for displaying said updated 3D representation with said enhanced rendering of the at least one structure of interest 630. The display may be performed on the second panel or on a third panel. The third panel may be different from the first panel and/or the second panel. The module 280 may be part of a stereoscopic display such as a VR headset or an auto stereoscopic screen.

The device 2 may provide as an output 50 the updated 3D representation and/or the computed transfer function outputted by either the module 261 or the module 262.

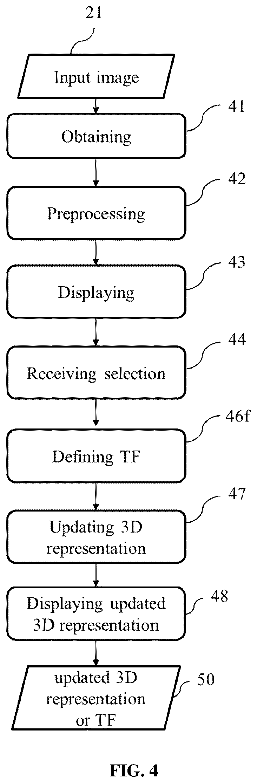

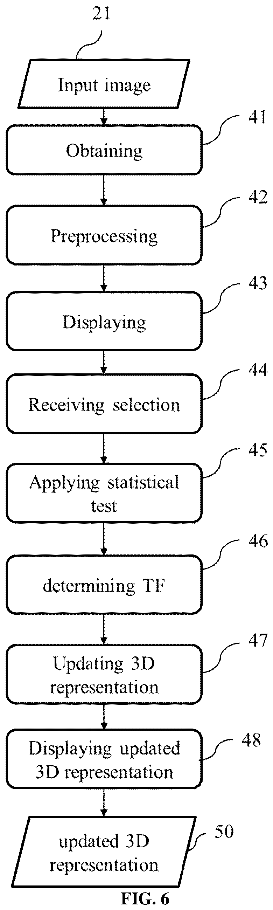

In its automatic actions, the device 2 may for example execute the following process (Figure 4, 5 and 6):
- obtaining the input image 21 and optionally the 3D representation 700 of said at least one input image 21 (step 41),
- preprocessing the image data 21 and optionally obtaining the 3D representation 700 of said at least one input image (step 42),
- optionally displaying at least one cross-section 600 of said at least one input image (step 43),
- receiving a selection of a subset 610 of voxels from said ensemble of voxels, wherein the selected subset 610 of voxels contains a majority of voxels corresponding to the at least one structure of interest 630 (step 44),
- applying at least one statistical test on the at least one feature values of said subset of voxels so as to determine a number of populations comprised in the subset of voxels (step 45),
- determining (step 46) the transfer function P=T(f) configured to associate to each voxel of the at least one input image 21 at least one parameter P of visualization, such as an opacity or a color, by:
   ∘ if said number is equal to one (Figure 6):
      ▪ computing a characteristic feature value, said characteristic feature value being referred to as center value f_{c} (step 46d);
      ▪ defining the transfer function (step 46e) by:
         - defining the transfer function, for feature values inferior to the center value f<f_{c}, as an increasing function T₁,
         - defining the transfer function, for feature values superior to the center value f>f_{c}, as a decreasing function T₂ verifying, ${T}_{2} \left(f\right) > {T}_{1} \left({2 f}_{c}-f\right) ;$
   ∘ if said number is not equal to one (Figure 5):
      ▪ clustering the subset 610 of voxels into at least two populations based on at least one feature value of the subset 610 of voxels (step 46a),
         - selecting an interest population 620 having highest probability to correspond to the at least one structure of interest 630 (step 46b),
      ▪ defining the transfer function (step 46c), by executing:
         - computing a characteristic feature value for the interest population 620, referred to as center value f_{c},
         - defining said transfer function, for feature values inferior to the center value f<f_{c}, as an increasing function T₁,
         - defining said transfer function, for feature values superior to the center value f>f_{c}, as a decreasing function T₂ verifying, T₂(f)>T₁(2f_{c}-f),
- updating said 3D representation, using said transfer function on the at least one input image 21, so that the updated 3D representation provides an enhanced 3D representation of the at least one structure of interest 630 (step 47),
- displaying said updated 3D representation with said enhanced rendering of the at least one structure of interest 630 (step 48).

The device 1 may further execute extracting and providing as an output 50 the updated 3D representation and/or the transfer function.

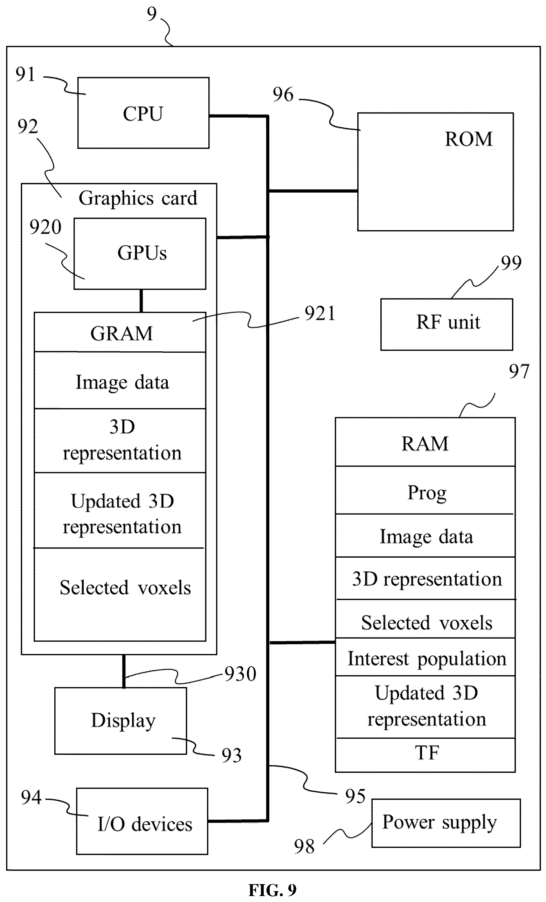

A particular apparatus 9, visible on Figure 9, is embodying the device 1 or the device 2 described above. It corresponds for example to a workstation, a laptop, a tablet, a smartphone, or a head-mounted display (HMD).

That apparatus 9 is suited to image generation with an enhanced rendering of at least one structure of interest. It comprises the following elements, connected to each other by a bus 95 of addresses and data that also transports a clock signal:
- a microprocessor 91 (or CPU);
- a graphics card 92 comprising several Graphical Processing Units (or GPUs) 920 and a Graphical Random Access Memory (GRAM) 921; the GPUs are quite suited to image processing, due to their highly parallel structure;
- a non-volatile memory of ROM type 96;
- a RAM 97;
- one or several I/O (Input/Output) devices 94 such as for example a keyboard, a mouse, a trackball, a webcam; other modes for introduction of commands such as for example vocal recognition are also possible;
- a power source 98; and
- a radiofrequency unit 99.

According to a variant, the power supply 98 is external to the apparatus 9.

The apparatus 9 also comprises a display device 93 of display screen type directly connected to the graphics card 92 to display synthesized images calculated and composed in the graphics card. The use of a dedicated bus to connect the display device 93 to the graphics card 92 offers the advantage of having much greater data transmission bitrates and thus reducing the latency time for the displaying of images composed by the graphics card, for example for obtaining updated 3D representation. According to a variant, a display device is external to apparatus 9 and is connected thereto by a cable or wirelessly for transmitting the display signals. The apparatus 9, for example through the graphics card 92, comprises an interface for transmission or connection adapted to transmit a display signal to an external display means such as for example an LCD or plasma screen or a video-projector. In this respect, the RF unit 99 can be used for wireless transmissions.

It is noted that the word "register" used hereinafter in the description of memories 97 and 921 can designate in each of the memories mentioned, a memory zone of low capacity (some binary data) as well as a memory zone of large capacity (enabling a whole program to be stored or all or part of the data representative of data calculated or to be displayed). Also, the registers represented for the RAM 97 and the GRAM 921 can be arranged and constituted in any manner, and each of them does not necessarily correspond to adjacent memory locations and can be distributed otherwise (which covers notably the situation in which one register includes several smaller registers).

When switched-on, the microprocessor 91 loads and executes the instructions of the program contained in the RAM 97.

As will be understood by a skilled person, the presence of the graphics card 92 is not mandatory, and can be replaced with entire CPU processing and/or simpler visualization implementations.

In variant modes, the apparatus 9 may include only the functionalities of the device 1, only the functionalities of the device 2 or the functionalities of both the device 1 and the device 2. In addition, the device 1 and/or the device 2 may be implemented differently than a standalone software, and an apparatus or set of apparatus comprising only parts of the apparatus 9 may be exploited through an API call or via a cloud interface.

## Claims

1. A computer-implemented method for generating an output image with an enhanced rendering of at least one structure of interest (630) comprised in at least one input image (21), said method comprising:
- obtaining (41) said at least one input image (21), said at least one input image (21) being a 3D image composed of an ensemble of voxels, wherein each voxel is associated to at least one feature value;
- obtaining a 3D representation (700) of said at least one input image, said 3D representation (700) being obtained via ray-based volume rendering;
- receiving (44) a selection of a subset of voxels (610) from said ensemble of voxels, wherein the selected subset of voxels (610) contains a majority of voxels corresponding to the at least one structure of interest (630);
- determining (46) a first transfer function (51) P=T(f) configured to associate to each voxel of the at least one input image (21) at least one parameter P of visualization, such as an opacity, by executing:
∘ clustering (46a) the subset of voxels (610) into at least two populations based on at least one feature value of the subset of voxels;
∘ selecting (46b), among said at least two populations, an interest population (620) having highest probability to correspond to the at least one structure of interest (630);
∘ defining (46c) the first transfer function (51) by executing:
▪ computing a characteristic feature value for the interest population (620), referred to as center value f_{c}, based on at least one feature value of the interest population (620),
▪ defining said first transfer function (51), for feature values inferior to the center value f<f_{c}, as an increasing function T₁,
▪ defining said first transfer function (51), for feature values superior to the center value f>f_{c}, as a decreasing function T₂ verifying, T₂(f)>T₁(2f_{c}-f),
- updating (47) said 3D representation (700), using said first transfer function (51) on the at least one input image (21), so that the updated 3D representation (800) provides an enhanced 3D representation of the at least one structure of interest (630),
- displaying (48) said updated 3D representation (800) with said enhanced rendering of the at least one structure of interest (630).

2. The method according to either one of claims **1** further comprising displaying (43) at least one cross-section (600) of said at least one input image (21).

3. The method according to either one of claims **2,** wherein displaying (43) at least one cross-section (600) of said at least one input image (21) further comprises displaying the 3D representation (700), the at least one cross-section (600) of said at least one input image (21) and the 3D representation (700) being displayed on two different panels and displaying the updated 3D representation (800) is performed on said second panel.

4. A computer-implemented method for defining a first transfer function (51) to apply to at least one input image (21) in order to obtain an output image with an enhanced rendering of at least one structure of interest (630) comprised in at least one input image (21), said at least one input image (21) being a 3D image composed of an ensemble of voxels, said method comprising:
- receiving (44) a selection of a subset of voxels (610) from said ensemble of voxels, wherein the selected subset of voxels (610) contains a majority of voxels corresponding to the at least one structure of interest (630);
- determining (46) a first transfer function (51) P=T(f) configured to associate to each voxel of the at least one input image (21) at least one parameter P of visualization, such as an opacity, by executing:
∘ clustering (46a) the subset of voxels (610) into at least two populations using a fitting algorithm applied to at least one feature value of the subset of voxels (610);
∘ selecting (46b) an interest population (620) having highest probability to correspond to the at least one structure of interest (630);
o defining (46c) the first transfer function (51) by executing:
▪ computing a characteristic feature value of the interest population (620), referred to as center value f_{c}, based on at least one feature value of the interest population (620),
▪ defining the first transfer function (51), for feature values inferior to the center value f<f_{c}, as an increasing function T_{1,}
▪ defining the first transfer function (51), for feature values superior to the center value f>f_{c}, as a decreasing function T₂ verifying, T₂(f)>T₁(2f_{c}-f),
- providing as output said first transfer function (51).

5. The method according to any one of claims **1** to **4,** wherein selecting the interest population (620) comprises using a fitting algorithm a Gaussian mixture model comprising at least two Gaussian distributions and further comprises:
- fitting the Gaussian Mixture Model to said at least two populations through a fitting algorithm applied to the at least one feature values of the voxels of the at least two populations so as each one of said at least two populations is fitted to one Gaussian distribution,
- receiving a selection of at least one voxel of said at least one input image (21), said at least one voxel having a feature value referred to as interest feature value;
- selecting the interest population (620) as the one corresponding to the Gaussian distribution among the at least two Gaussian distributions whose a mean value is the closest to said received interest feature value.

6. A computer-implemented method for defining a second transfer function (52) to apply to at least one input image (21) in order to obtain generating an output image with an enhanced rendering of at least one structure of interest (630) comprised in at least one input image (21), said at least one input image (21) being a 3D image composed of an ensemble of voxels, said method comprising:
- receiving (44) a selection of a subset of said ensemble of voxels (610), wherein the selected subset of voxels (610) contains a majority of voxels corresponding to the at least one structure of interest (630);
- determining (46) a second transfer function (52) P=T(f) configured to associate to each voxel of the at least one input image (21) at least one parameter P of visualization, such as an opacity, by executing:
∘ computing (46d) a characteristic feature value, said characteristic feature value being referred to as center value f_{c} based on at least one feature value of the selected subset of voxels (610);
∘ defining (46e) the second transfer function (52) by executing:
▪ defining the second transfer function (52), for feature values inferior to the center value f<f_{c}, as an increasing function T_{1,}
▪ defining the second transfer function (52), for feature values superior to the center value f>f_{c}, as a decreasing function T₂ verifying, T₂(f)>T₁(2f_{c}-f),
- providing as output said second transfer function (52).

7. The method according to claim **6,** wherein defining said increasing function T₁ and said decreasing function T₂ is based on parameters of either said the at least one feature values of the voxels of the selected subset (610) or said distribution curve.

8. The method according to any one of the preceding claims, wherein the at least one parameter P of visualization is an opacity value.

9. The method according to any one of the preceding claims, wherein the at least one feature value is an intensity value.

10. The method according to claim **1, 4** or **6,** wherein computing a characteristic feature value of the interest population (620) is performed by fitting a distribution curve to said selected subset through a fitting algorithm applied to the at least one feature values of the voxels of the selected subset, the fitting algorithm being based on a Lorentzian Mixture Model, a Gaussian Mixture Model or a Voigt Mixture Model.

11. A computer-implemented method for generating an output image with an enhanced rendering of at least one structure of interest (630) comprised in at least one input image (21), said method comprising:
- obtaining (41) said at least one input image (21), said at least one input image (21) being a 3D image composed of an ensemble of voxels, wherein each voxel is associated to at least one feature value;
- obtaining a 3D representation (700) of said at least one input image (21), said 3D representation being obtained via ray-based volume rendering;
- receiving (44) a selection of a subset of voxels (610) from said ensemble of voxels, wherein the selected subset of voxels (610) contains a majority of voxels corresponding to the at least one structure of interest (630);
- applying (45) at least one statistical test on the at least one feature values of said subset of voxels (610) so as to determine a number of populations comprised in the subset of voxels (610);
- determining (46) a transfer function by:
∘ if said number is equal to one, providing said selection of subset of voxels (610) as input to the computer-implemented method according to claim **6,** and implementing said method to obtain a first transfer function (51) as transfer function; else
∘ providing said subset of voxels (610) as input to the computer-implemented method according to claim **4,** implementing said method to obtain a second transfer function (52) as transfer function;
- updating (47) said 3D representation (700), using said transfer function on the at least one input image (21), so that the updated 3D representation (800) provides an enhanced 3D representation of the at least one structure of interest (630),
- displaying (48) said updated 3D representation (800) with said enhanced rendering of the at least one structure of interest (630).

12. The method according to claim **1, 2, 3** or **11,** wherein displaying (48) the updated 3D representation (800) with said enhanced rendering of the at least one structure of interest (630) is performed using a stereoscopic display such as a VR headset or an auto stereoscopic screen.

13. The method according to claim **1, 11** or **12,** further comprising displaying (43) at least one cross-section (600) of said at least one input image (21) in a displaying panel and wherein receiving (44) a selection of a subset of voxels (610) is performed by positioning a cursor in said displaying panel, the subset of voxels (610) being selected inside a predetermined 3D geometrical shape centered on or in vicinity of a position of the cursor in said displaying panel.

14. The method according to claim **1, 11** or **12,** further comprising, before receiving (44) a selection of a subset of voxels (610), labelling each voxel with at least one label value, displaying (43) at least one cross-section (600) of said at least one input image (21) in a displaying panel and wherein receiving (44) a selection of a subset of voxels (610) is performed by positioning a cursor in said displaying panel and selecting the voxels labelled with the label value equal to the label value of the voxel the closest to a position of the cursor in said displaying panel.

15. A computer program product comprising instructions which, when the program is executed by a computer, cause the computer to carry out the method according to any one of claims **1** to **12.**
